# EUROPEAN PATENT SPECIFICATION

(11) **EP 3 754 163 B1**
(45) Date of publication and mention of the grant of the patent: **17.01.2024**
(21) Application number: 20181159.3
(22) Date of filing: 19.06.2020
(51) Int. Cl.: F01N 3/08, F01N 3/00

(54) **INFORMATION PROVISION SYSTEM**
INFORMATIONSBEREITSTELLUNGSSYSTEM
SYSTÈME DE FOURNITURE D'INFORMATIONS

(30) Priority: 21.06.2019 JP 2019115848
(43) Date of publication of application: 23.12.2020
(73) Proprietor: TOYOTA JIDOSHA KABUSHIKI KAISHA, TOYOTA-SHI, AICHI-KEN 471-8571 (JP)
(72) Inventor: SUGIYAMA, Kouseki, Aichi-ken, 471-8571 (JP); YOKOYAMA, Daiki, Aichi-ken, 471-8571 (JP)
(74) Representative: D Young & Co LLP

(56) References cited:
- DE-A1-102008 002 695
- JP-A- 2011 185 854
- US-A1- 2007 203 643
- US-A1- 2015 033 701
- US-A1- 2015 106 001
- US-A1- 2017 030 234

## Description

### FIELD

The present disclosure relates to an information provision apparatus.

### BACKGROUND

Japanese Unexamined Patent Publication No. 2014-509360 discloses a conventional vehicle mounting a carbon dioxide recovery system recovering carbon dioxide in exhaust discharged from an internal combustion engine.

US8647596B1 relates to methods and systems for removing carbon dioxide from combustion gas from an engine of a vehicle and methods of managing carbon dioxide emissions from an engine of a vehicle. US2015/033701A1 relates to vehicles with reduced carbon dioxide emissions for which the carbon dioxide emissions are stored in a carbon dioxide clathrate. DE102008002695A1 relates to a method for determining a route from a starting point to a destination point in a navigation system for a motor vehicle. US2015/106001A1 relates to determining an estimated fuel consumption for a route for a vehicle. US2007/203643A1 relates to a method for displaying waypoint information on the screen of a vehicle navigation system. JP2011185854A relates to a navigation system that provides useful information with superior visibility when no route guidance is performed.

### SUMMARY

The present invention is defined in the appended independent claims. Advantageous features are set out in the appended dependent claims. Any embodiments or examples of the following description which are not within the scope of the appended claims are provided for illustrative purposes.

To slow the progression of global warming, raising the awareness of every individual of the need to tackle issues in the global environment has become necessary. However, in the above-mentioned conventional vehicles, even if it were possible to recover the carbon dioxide, the cause of global warming, there was the problem that it was not possible to raise the awareness of the occupants of the vehicles (in particular the drivers) regarding recovery of carbon dioxide.

The present disclosure was made focusing on the above such problem and has as its object to raise the awareness of occupants of vehicles regarding recovery of carbon dioxide.

To solve this problem, according to one aspect of the present disclosure, there is provided an information provision apparatus configured to provide information to an occupant of a vehicle provided with a carbon dioxide recovery system. The information provision apparatus is provided with a processing part configured to: judge if the occupant of the vehicle has input a destination of the vehicle, and in response to judging that the occupant of the vehicle has input the destination of the vehicle, acquire a current position signal and generate an information request signal including data on the current position and the destination of the vehicle; a display part configured to display information; a wireless communication part configured to transmit the information request signal to request, from a server, the transmission of information relating to a candidate route to the destination of the vehicle and an estimated amount of recovery of carbon dioxide which would be recovered by the carbon dioxide recovery system if driving on the candidate route; wherein the wireless communication part is further configured to receive a data signal from the server including information relating to the candidate route and the estimated amount of recovery of carbon dioxide which would be recovered by the carbon dioxide recovery system if driving on the candidate route; and an information display processing part configured to display, on the display part, information, relating to the candidate route to the destination of the vehicle and the estimated amount of recovery of carbon dioxide which would be recovered by the carbon dioxide recovery system if driving on the candidate route, linked together.

According to this aspect of the present disclosure, it is possible to inform a vehicle occupant of candidate routes to a destination and the estimated amounts of recovery of carbon dioxide for the candidate routes, so it is possible to raise the awareness of the vehicle occupant of the recovery of carbon dioxide.

### BRIEF DESCRIPTION OF DRAWINGS

FIG. 1 is schematic view of a configuration of an information provision system according to a first embodiment of the present disclosure.
FIG. 2 is schematic view of a configuration of a carbon dioxide recovery system according to the first embodiment of the present disclosure.
FIG. 3 is schematic view of a configuration of an HMI device according to the first embodiment of the present disclosure.
FIG. 4 is a functional block diagram showing details of the various types of processing performed by the HMI processing part of the HMI device in the first embodiment of the present disclosure.
FIG. 5 is schematic view of a configuration of a server according to the first embodiment of the present disclosure.
FIG. 6 is a functional block diagram showing details of the various types of processing performed by a server processing part of the server in the first embodiment of the present disclosure.
FIG. 7 is a flow chart showing one example of information provision processing according to the first embodiment of the present disclosure.
FIG. 8 is a view showing one example of information displayed on an information display screen in the first embodiment of the present disclosure.
FIG. 9 is a functional block diagram showing details of the various types of processing performed by a server processing part of a server in a second embodiment of the present disclosure.
FIG. 10 is a flow chart showing one example of information provision processing according to the second embodiment of the present disclosure.
FIG. 11 is a flow chart showing details of processing for identifying recommended waypoints according to the second embodiment of the present disclosure.
FIG. 12 is a view showing one example of information displayed on an information display screen in the second embodiment of the present disclosure.
FIG. 13 is a flow chart showing details of processing for identifying recommended waypoints according to a third embodiment of the present disclosure.
FIG. 14 is a functional block diagram showing details of the various types of processing performed by a server processing part of a server in a fourth embodiment of the present disclosure.
FIG. 15 is a flow chart showing one example of information provision processing according to the fourth embodiment of the present disclosure.
FIG. 16 is a view showing one example of information displayed on an information display screen in the fourth embodiment of the present disclosure.

### DESCRIPTION OF EMBODIMENTS

Below, referring to the drawings, embodiments of the present disclosure will be explained in detail. Note that, in the following explanation, similar component elements will be assigned the same reference notations.

### First Embodiment

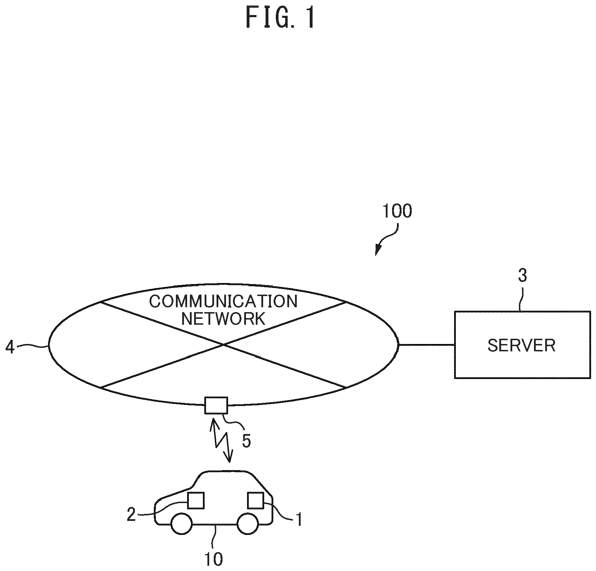

FIG. 1 is schematic view of the configuration of an information provision system 100 according to a first embodiment of the present disclosure.

As shown in FIG. 1, the information provision system 100 according to the present embodiment is provided with an HMI (human machine interface) device 2 mounted in a vehicle 10 provided with a carbon dioxide recovery system 1 (below, referred to as a "carbon dioxide recovering vehicle") and a server 3.

The HMI device 2 and the server 3 are connected through a communication network 4 configured by optical telecommunication lines etc. and are able to communicate with each other. In the present embodiment, the HMI device 2 accesses a wireless base station 5 connected through the communication network 4 and a gateway (not shown) etc. to thereby be connected with the communication network 4 through the wireless base station 5. Further, the server 3 is connected with the communication network 4 through a gateway (not shown).

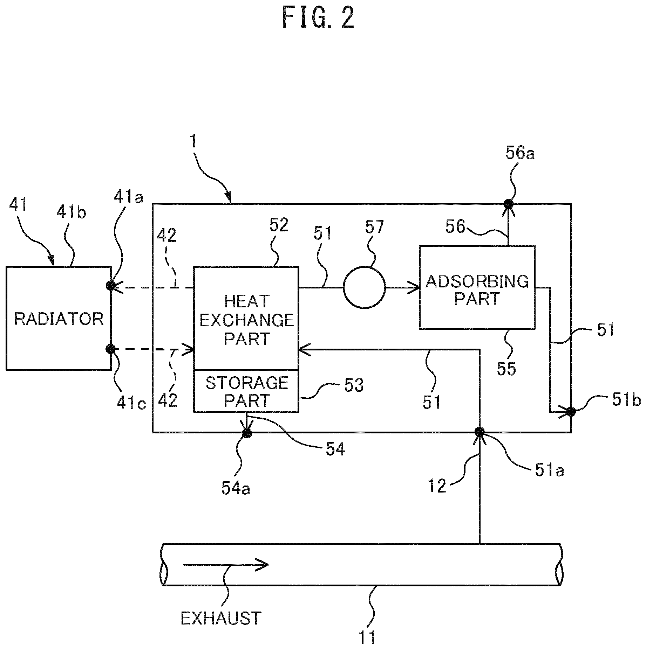

Below, referring to FIG. 2 to FIG. 6, details of the carbon dioxide recovery system 1, HMI device 2, and server 3 will be explained.

First, referring to FIG. 2, details of the carbon dioxide recovery system 1 will be explained. FIG. 2 is schematic view of the configuration of the carbon dioxide recovery system 1 according to the present embodiment.

The carbon dioxide recovery system 1 is housed in for example a luggage space of the carbon dioxide recovering vehicle 10. In the present embodiment, the carbon dioxide recovering vehicle 10 is provided with an internal combustion engine (not shown). The carbon dioxide recovery system 1 is configured to be able to recover carbon dioxide in exhaust discharged from the internal combustion engine to an exhaust pipe 11. The method of recovery of the carbon dioxide in the exhaust according to the carbon dioxide recovery system 1 is not particularly limited, but for example a physical adsorption method or physical absorption method, chemical absorption method, cryogenic separation method, etc. such as explained below may be mentioned.

The physical adsorption method is the method of for example bringing activated carbon or zeolite or another solid adsorbent into contact with the exhaust to thereby make the carbon dioxide be adsorbed at the solid adsorbent and of heating this (or reducing the pressure of this) so as to make the carbon dioxide desorb from the solid adsorbent for recovery.

The physical absorption method is the method of bringing an absorption solution able to dissolve carbon dioxide (for example, methanol or ethanol) into contact with the exhaust to physically make the carbon dioxide be absorbed by the absorption solution at a high pressure and low temperature and of heating this (or reducing the pressure of this) so as to recover the carbon dioxide from the absorption solution.

The chemical absorption method is the method of bringing an absorption solution able to selectively dissolve carbon dioxide (for example, an amine) into contact with the exhaust to make the carbon dioxide be absorbed by the absorption solution by a chemical reaction and of heating this so as to make the carbon dioxide disassociate from the solid adsorbent for recovery.

The cryogenic separation method is a method of compressing and cooling the exhaust to cause the carbon dioxide to liquefy and of selectively distilling the liquefied carbon dioxide to thereby recover the carbon dioxide.

In the present embodiment, as the method for recovery of the carbon dioxide in the exhaust, the physical adsorption method is employed. The carbon dioxide recovery system 1 is configured so as to make the zeolite used as the solid adsorbent adsorb the carbon dioxide in the exhaust for recovery.

Specifically, as shown in FIG. 2, the carbon dioxide recovery system 1 according to the present embodiment is provided with a gas introduction port 51a, gas discharge port 51b, gas flow passage 51 connecting the gas introduction port 51a and gas discharge port 51b, radiator 41, cooling water circulation passage 42, heat exchange part 52 and adsorbing part 55 arranged above the gas flow passage 51, storage part 53, liquid discharge port 54a, liquid flow path 54 connecting the storage part 53 and liquid discharge port 54a, carbon dioxide collection port 56a, recovery passage 56 connecting the adsorbing part 55 and carbon dioxide collection port 56a, and flow sensor 57.

The gas introduction port 51a is an inlet for introducing gas containing carbon dioxide into the gas flow passage 51 inside the carbon dioxide recovery device 1. In the present embodiment, the gas introduction port 51a is connected through the connecting pipe 12 to the exhaust pipe 11 so as to enable gas flowing through the exhaust pipe 11 to be introduced from the gas introduction port 51a to the gas flow passage 51. The exhaust introduced from the gas introduction port 51a to the gas flow passage 51 flows through the gas flow passage 51 and is finally discharged from the gas discharge port 51b.

The radiator 41 is provided with a cooling water inlet part 41a, core part 41b, and cooling water outlet part 41c. The high temperature cooling water introduced from the cooling water inlet part 41a is cooled at the core part 41b by for example heat exchange with the air or other low temperature gas then is discharged from the cooling water outlet part 41c.

The cooling water circulation passage 42 is a passage for supplying cooling water discharged from the radiator 41 to the heat exchange part 52 for cooling the exhaust introduced to the carbon dioxide recovery device 1, then returning it to the radiator 41 for circulation. The cooling water circulation passage 42 is connected at one end to the cooling water inlet part 41a of the radiator 41 and is connected at the other end to the cooling water outlet part 41c of the radiator 41.

The heat exchange part 52 is connected to the gas flow passage 51 and cooling water circulation passage 42. It is configured to exchange heat between the exhaust flowing through the gas flow passage 51 and the cooling water flowing through the cooling water circulation passage 42 and enable the exhaust flowing through the gas flow passage 51, that is, the exhaust introduced inside of the carbon dioxide recovery device 1, to be cooled.

The storage part 53 stores the condensed water formed by cooling the exhaust at the heat exchange part 52. The condensed water inside the storage part 53 is discharged through the liquid flow path 54 from the liquid discharge port 54a to outside the carbon dioxide recovery device 1.

The adsorbing part 55 is connected to the gas flow passage 51 at the downstream side from the heat exchange part 52 so as to be able to introduce the exhaust cooled by the heat exchange part 52 to inside it. The adsorbing part 55 has zeolite as a solid adsorbent inside it and adsorbs the carbon dioxide in the exhaust introduced through the gas flow passage 51 to the inside of the adsorbing part 55. The exhaust from which carbon dioxide has been adsorbed by the adsorbing part 55 and thereby reduced in carbon dioxide concentration flows through the gas flow passage 51 at the downstream side from the adsorbing part 55 and is discharged from the gas discharge port 51b into the outside air.

The recovery passage 56 is a passage for recovering the carbon dioxide adsorbed at the solid adsorbent of the adsorbing part 55 from the carbon dioxide collection port 56a. In the present embodiment, the adsorbing part 55 is heated through the recovery passage 56 while depressurizing the adsorbing part 55 to thereby make the carbon dioxide adsorbed at the solid adsorbent desorb from the solid adsorbent and the desorbed carbon dioxide is sucked out through the recovery passage 56 from the adsorbing part 55 and recovered from the carbon dioxide collection port 56a. Note that, if necessary, it is also possible to provide a shutoff valve in the recovery passage 56 and open the shutoff valve only at the time of recovery of carbon dioxide.

The flow sensor 57 is provided at the gas flow passage 51 between the heat exchange part 52 and the adsorbing part 55 and detects the amount of flow of the exhaust introduced to the adsorbing part 55. In the present embodiment, the amount of the carbon dioxide adsorbed at the adsorbing part 55 (below, referred to as the "amount of adsorbed carbon dioxide") is estimated based on the amount of flow of exhaust detected by this flow sensor 57.

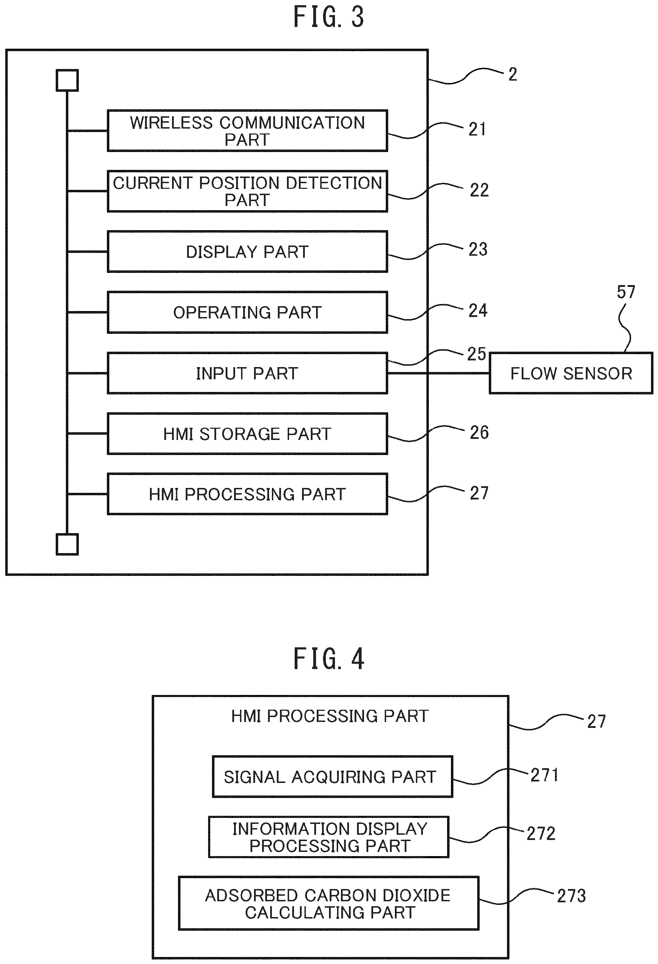

Next, referring to FIG. 3, details of the HMI device 2 will be explained. FIG. 3 is a schematic view of the configuration of the HMI device 2 according to the present embodiment.

The HMI device 2 is a device for transferring information with a driver or other occupant of the carbon dioxide recovering vehicle 10 (below referred to as the "vehicle occupant") and is provided with a wireless communicating part 21, current position detecting part 22, display part 23, operating part 24, input part 25, HMI storage part 26, and HMI processing part 27. The HMI device 2 according to the present embodiment is a device mounted in advance in the carbon dioxide recovering vehicle 10, but the disclosure is not limited to this. It may also be a mobile terminal carried by the vehicle occupant.

The wireless communicating part 21 is provided with an antenna and a signal processing circuit performing various types of processing relating to wireless communication such as modulation and demodulation of the wireless signal. When the wireless communicating part 21 receives a downlink wireless signal from the wireless base station 5 connected through the communication network 4 and gateway etc., it transfers that wireless signal to the HMI processing part 27. Further, when a signal sent from the HMI processing part 27 to the server 3 (for example, a later explained information request signal or contact signal) is transferred to it, the wireless communicating part 21 generates an uplink wireless signal containing that signal and sends it to the wireless base station 5.

The current position detecting part 22 is provided with a receiver receiving GPS signals from GPS satellites and a processing circuit calculating the position of the HMI device 2 (longitude and latitude) based on the GPS signals. The current position detecting part 22 deems the position of the HMI device 2 calculated based on the GPS signal as the current position of the carbon dioxide recovering vehicle 10. Further, the current position detecting part 22 generates and outputs a current position signal including the current position data of the carbon dioxide recovering vehicle 10.

The display part 23 is provided with an information display screen placed at a position able to be viewed by the vehicle occupant. The information display screen is, for example, a liquid crystal display or organic EL display, or other various types of displays. The display part 23 displays information (for example, text information or image information) corresponding to a signal output from the HMI processing part 27 (for example, the later explained first information display signal or second information display signal) on the information display screen.

The operating part 24 is provided with an input part for the vehicle occupant to perform an input operation. The input part is, for example, a touch panel arranged on the information display screen or various types of physical operating buttons etc. arranged around the information display screen. The operating part 24 generates and outputs an operating signal in accordance with the input operation of the vehicle occupant.

The input part 25 is provided with a terminal for inputting to the HMI device 2 the output signals from the various types of sensors mounted in the carbon dioxide recovering vehicle 10. In the present embodiment, the input part 25 receives as input the output signal of the flow sensor 57. Note that when the HMI device 2 is a mobile terminal, for example, it is sufficient to make the input part 25 a near distance wireless communicating device and enable reception of an input signal of the flow sensor 57.

The HMI storage part 26 has an HDD (hard disk drive), optical storage medium, semiconductor memory, or other storage medium and stores various types of computer programs run at the HMI processing part 27 and various types of data used at the HMI processing part 27 (for example, map data etc.). Further, the HMI storage part 26 stores the data generated at the HMI processing part 27 and the data received by the HMI processing part 27 through the communication network 4 from the server 3.

The HMI processing part 27 has one or more processors and their peripheral circuits. The HMI processing part 27 performs various types of processing based on computer programs stored in the HMI storage part 26. The HMI processing part 27 can run a plurality of computer programs in parallel. Below, referring to FIG. 4, the various types of processing performed at the HMI processing part 27 will be explained.

FIG. 4 is a functional block diagram showing details of the various type of processing performed at the HMI processing part 27.

The HMI processing part 27 is provided with a signal acquiring part 271, information display processing part 272, and adsorbed carbon dioxide calculating part 273. These parts of the HMI processing part 27 are functional modules loaded by programs run on a processor of the HMI processing part 27.

The signal acquiring part 271 acquires the wireless signal which the wireless communicating part 21 receives and transfers it to the information display processing part 272. Further, the signal acquiring part 271 acquires the current position signal output from the current position detecting part 22 and transfers it to the information display processing part 272. Further, the signal acquiring part 271 acquires the operating signal output from the operating part 24 and transfers it to the information display processing part 272. Further, the signal acquiring part 271 acquires the output signal of the flow sensor 57 input from the input part 25 and transfers it to the adsorbed carbon dioxide calculating part 273.

When an operating signal is transferred, in accordance with the content of the operating signal, the information display processing part 272 generates a signal for displaying information corresponding to the content of that operating signal (for example, information which the vehicle occupant requests be displayed on the information display screen) on the information display screen (below, referred to as a "first information display signal"), a signal for requesting various types of information from the server 3 (below, referred to as an "information request signal"), a signal for conveying the content of the operating signal to the server 3 (below, referred to as the "contact signal"), etc.

Further, when generating the first information display signal, the information display processing part 272 outputs the first information display signal to the display part 23 to make the information display screen display information corresponding to the content of the first information display signal. Further, when generating the information request signal or contact signal, the information display processing part 272 transfers the information request signal or contact signal to the wireless communicating part 21 and makes the wireless communicating part 21 send it to the server 3.

Further, when a wireless signal is transferred to it, the information display processing part 272 generates a signal for displaying information corresponding to the content of the wireless signal (for example, various types of information sent from the server 3 corresponding to the information request signal) on the information display screen (below, referred to as the "second information display signal"). Further, when generating the second information display signal, the information display processing part 272 outputs the second information display signal to the display part 23 to make the information display screen display information corresponding to the content of the second information display signal.

The adsorbed carbon dioxide calculating part 273 calculates the amount of adsorbed carbon dioxide based on the output signal of the flow sensor 57.

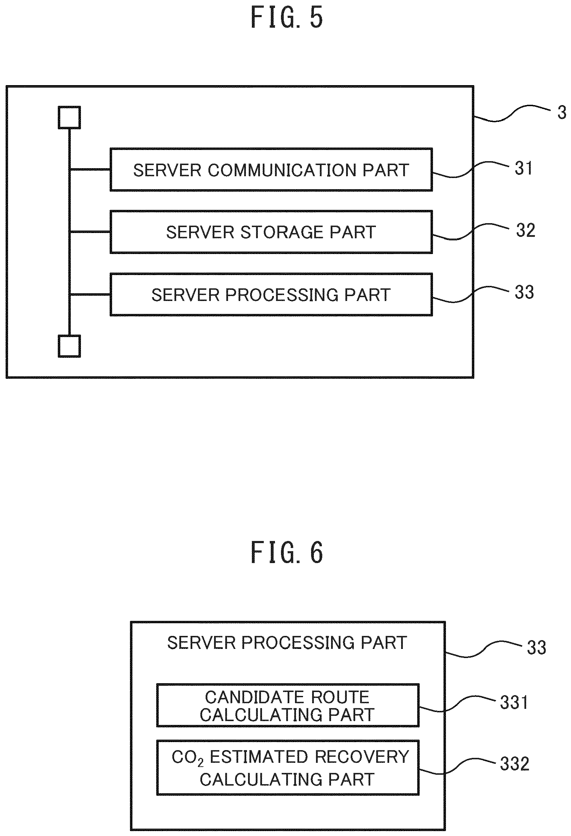

Next, referring to FIG. 5, details of the server 3 will be explained. FIG. 5 is a schematic view of the configuration of the server 3.

The server 3 is provided with a server communicating part 31, server storage part 32, and server processing part 33.

The server communicating part 31 has an interface circuit for connecting the server 3 with the communication network 4 through, for example, a gateway etc. The server communicating part 31 transfers the wireless signal received through the communication network 4 from the HMI device 2 to the server processing part 33. Further, when a signal for transmission from the server processing part 33 to the HMI device 2 (for example, the later explained first data signal etc.) is transferred to it, the server communicating part 31 generates a wireless signal including that signal and sends it through the communication network 4 to the HMI device 2. Further, the server communicating part 31 receives outside information sent from a road traffic information communication system or other external communication center (not shown) (for example, congestion information or weather information, state of crowding of service areas or parking areas, etc.)

The server storage part 32 has an HDD (hard disk drive), optical storage medium, semiconductor memory, or other storage medium and stores various types of computer programs run at the server processing part 33 and various types of data used at the server processing part 33 (for example, map data etc.) Further, the server storage part 32 stores the data generated at the server processing part 33 and the data received by the server processing part 33 through the communication network 4 from the HMI device 2 or outside communication center.

The server processing part 33 has one or more processors and their peripheral circuits. The server processing part 33 performs various types of processing based on computer programs stored in the server storage part 32. The server processing part 33 can run a plurality of computer programs in parallel. Below, referring to FIG. 6, the various types of processing performed at the server processing part 33 will be explained.

FIG. 6 is a functional block diagram showing the contents of the various types of processing performed at the server processing part 33.

The server processing part 33 is provided with a candidate route calculating part 331 and a CO₂ estimated recovery calculating part 332. These parts of the server processing part 33 are functional modules loaded by programs run on the processor of the server processing part 33.

The candidate route calculating part 331 refers to the map data stored in the server storage part 32 and, based on the data of the current location and destination of the carbon dioxide recovering vehicle 10 contained in the wireless signal sent from the HMI device 2, calculates one or more candidates of driving routes from the current location to the destination (below, referred to as the "candidate routes").

The CO₂ estimated recovery calculating part 332 calculates the estimated amount of carbon dioxide which can be recovered by the carbon dioxide recovery system 1 when driving over each candidate route (below, referred to as the "estimated amount of CO₂ recovery") for each candidate route calculated by the candidate route calculating part 331. In the present embodiment, specifically, it calculates the estimated amount of CO₂ recovery of each candidate route in the following way.

No matter which of the above-mentioned methods the carbon dioxide recovery system 1 employs as the method of recovery of carbon dioxide, the higher the temperature of the exhaust introduced into the carbon dioxide recovery system 1 (carbon dioxide-containing gas), the more the amount of carbon dioxide which can be recovered tends to decrease. This is because in the case of the physical adsorption method or physical absorption method or chemical absorption method, the more the temperature of the adsorbing part 55 (or absorbing part) rises, the more dominant the desorption or disassociation of carbon dioxide tends to become at the adsorbing part 55 and because the higher the temperature of the exhaust introduced into the carbon dioxide recovery system 1, the easier it becomes for the temperature of the adsorbing part 55 (or absorbing part) to rise due to the relatively high temperature gas flowing into the adsorbing part 55 (or absorbing part). Further, in the case of the cryogenic separation method, the higher the temperature of the exhaust introduced into the carbon dioxide recovery system 1, the more liquefaction of the carbon dioxide ends up being obstructed.

Therefore, in the present embodiment, the map data stored in the server storage part 32 is referred to, the overall driving load when driving over each candidate route is calculated, and the estimated amounts of CO₂ recovery are calculated based on the overall driving loads of the candidate routes so that the higher the driving load of a candidate route, that is, the longer the time period over which high temperature exhaust is introduced into the carbon dioxide recovery system 1 as a tendency of a candidate route, the smaller the estimated amount of CO₂ recovery becomes.

Note that, in calculating the estimated amounts of CO₂ recovery of the candidate routes, in addition to such overall driving loads of the candidate routes, for example, it is also possible to identify the driver of the carbon dioxide recovering vehicle 10, learn the driving tendencies of the driver, and correct the estimated amount of CO₂ recovery in accordance with the driving tendencies of the driver. For example, in the case of a driver who tends to drive with a large frequency of acceleration and high driving load, it is possible to correct the estimated amount of CO₂ recovery to become smaller than usual.

Further, for example, it is also possible to correct the estimated amount of CO₂ recovery in accordance with congestion and other road conditions or the weather. For example, if congestion occurs, the driving load tends to become higher than normal, so the estimated amount of CO₂ recovery can be corrected to become smaller than usual. Further, for example, when the humidity is high, the performance of the adsorbing part 55 in absorbing carbon dioxide tends to fall compared to when it is low, so the estimated amount of CO₂ recovery can be corrected to become smaller when the humidity is high compared to when it is low.

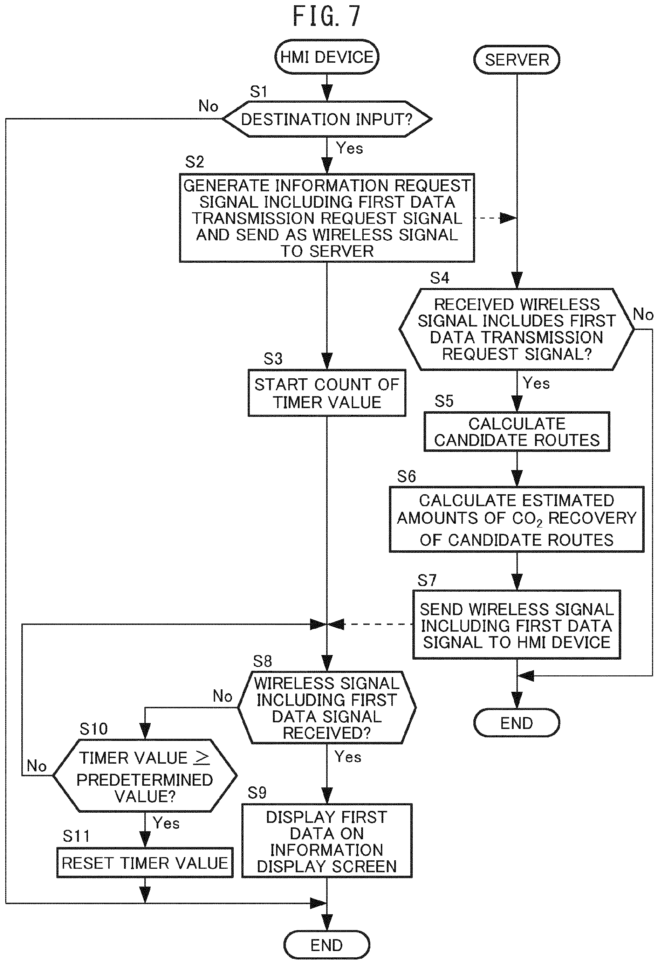

FIG. 7 is a flow chart showing one example of the information provision processing according to the present embodiment. In the flow chart shown in FIG. 7, the HMI device 2 and the server 3 communicate through the communication network 4.

At step S1, the HMI processing part 27 judges if the vehicle occupant has input a destination. Specifically, the HMI processing part 27 judges if the acquired operating signal includes data on the destination. If the acquired operating signal includes data on the destination, the HMI processing part 27 judges that the vehicle occupant has input the destination and proceeds to the processing of step S2. On the other hand, if the acquired operating signal does not include data on the destination, the HMI processing part 27 ends the information provision processing.

At step S2, the HMI processing part 27 acquires the current position signal and generates an information request signal including the data on the current position and destination and the first data transmission request signal. Further, the HMI processing part 27 transfers the generated information request signal to the wireless communicating part 21 and makes the wireless communicating part 21 transmit the information provision signal as a wireless signal from the wireless communicating part 21 to the server 3. Note that, the first data transmission request signal is a signal requesting from the server 3 the transmission of information relating to one or more candidate routes from the current location to the destination and estimated amounts of CO₂ recovery if driving over the candidate routes (first data).

At step S3, the HMI processing part 27 starts the count of the timer value in order to obtain a grasp of the time elapsed from when the information request signal was sent as a wireless signal from the wireless communicating part 21 to the server 3.

At step S4, the server processing part 33 judges if the received wireless signal contains the first data transmission request signal. If the wireless signal contains the first data transmission request signal, the server processing part 33 proceeds to the processing of step S5. On the other hand, if the wireless signal does not contain the first data transmission request signal, the server processing part 33 ends the information provision processing.

At step S5, the server processing part 33 refers to the map data stored in the server storage part 32 and calculates one or more candidate routes from the current location to the destination based on the first data transmission request signal and data which had been included in the information request signal such as the current location of the carbon dioxide recovering vehicle 10 and its destination.

At step S6, the server processing part 33 calculates the estimated amounts of CO₂ recovery when driving over the candidate routes. In the present embodiment, the server processing part 33 refers to the map stored in the server storage part 32, estimates the overall driving loads of the candidate routes, and calculates the estimated amounts of CO₂ recovery of the candidate routes based on the driving loads of the candidate routes.

At step S7, the server processing part 33 generates a first data signal including information relating to the candidate routes and the estimated amounts of CO₂ recovery of the candidate routes (first data), transfers it to the server communicating part 31, and makes the wireless signal including the first data signal be sent from the server communicating part 31 to the HMI device 2.

At step S8, the HMI processing part 27 judges if it has received a wireless signal including the first data signal from the server 3. Specifically, the HMI processing part 27 judges if the wireless signal which had been transferred from the wireless communicating part 21 includes the first data signal. If the wireless signal which had been transferred from the wireless communicating part 21 includes the first data signal, the HMI processing part 27 proceeds to the processing of step S9. On the other hand, if the wireless signal which had been transferred from the wireless communicating part 21 does not include the first data signal, the HMI processing part 27 proceeds to the processing of step S10.

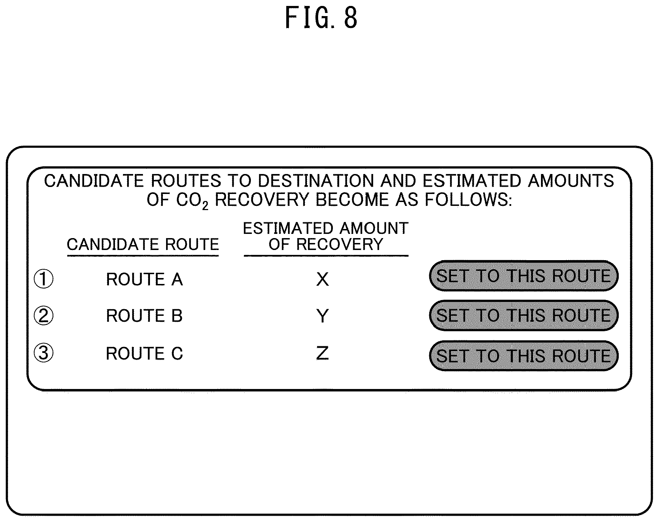

At step S9, the HMI processing part 27 generates a second information display signal including candidate routes and the estimated amounts of CO₂ recovery of the candidate routes (first data) and outputs it to the display part 23. For example, as shown in FIG. 8, it makes the information display screen display information relating to the candidate routes and the estimated amounts of CO₂ recovery of the candidate routes linked together plus selection buttons of the candidate routes. At that time, in the present embodiment, the candidate routes are made to be displayed so that the greater the estimated amount of CO₂ recovery, the higher the candidate route is listed.

At step S10, the HMI processing part 27 judges if the timer value is a preset predetermined value or more. If the timer value is the predetermined value or more, the HMI processing part 27 proceeds to the processing of step S11. On the other hand, if the timer value is less than the predetermined value, the HMI processing part 27 proceeds to the processing of step S8 again after a predetermined interval.

At step S11, the HMI processing part 27 resets the timer value to return it to zero.

According to the present embodiment explained above, there is provided an HMI device 2 (information provision apparatus) for providing information to an occupant of a vehicle 10 provided with a carbon dioxide recovery system 1. This is provided with a display part 23 displaying information and an information display processing part 272 configured to make the display part 23 display information relating to a candidate route to a destination of the vehicle 10 and an estimated amount of recovery of carbon dioxide which would be recovered by the carbon dioxide recovery system 1 if driving over the candidate route (estimated amount of CO₂ recovery) linked together.

Due to this, it is possible to inform the vehicle occupant of the candidate routes up to the destination and the estimated amount of CO₂ recovery for each candidate route and therefore possible to raise the awareness of the vehicle occupant regarding recovery of carbon dioxide.

Further, in the present embodiment, the information display processing part 272 is configured so that if there are several candidate routes present, it makes the display part display information relating to the candidate routes and the estimated amounts of CO2 recovery of the candidate routes linked together.

For this reason, the vehicle occupant can be given the opportunity to select the candidate route with the greater estimated amount of CO₂ recovery.

### Second Embodiment

Next, a second embodiment of the present disclosure will be explained. The present embodiment differs from the first embodiment on the point of informing the vehicle occupant of the fact that the available capacity of the carbon dioxide recovery system 1 is liable to be used up before the carbon dioxide recovering vehicle 10 reaches its destination, that is, the fact that the amount of adsorbed carbon dioxide is liable to reach the upper limit value of the amount of carbon dioxide able to be adsorbed at the adsorbing part 55 before reaching the destination (below, referred to as the "adsorption upper limit value"), when that is so and informing the vehicle occupant of waypoints able to collect the carbon dioxide recovered by the carbon dioxide recovery system 1 from the carbon dioxide recovery system 1 (collection locations). Below, this point of difference will be focused on in the explanation.

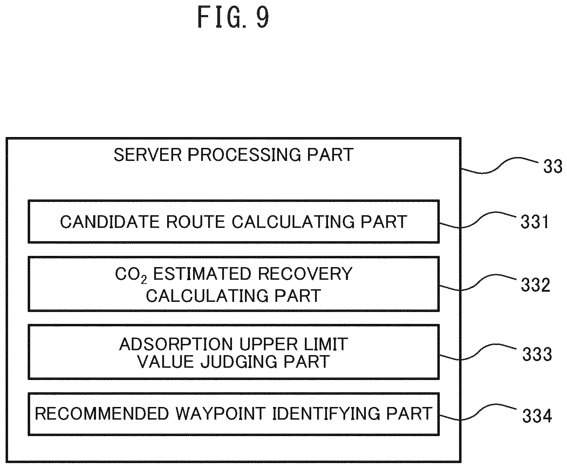

FIG. 9 is a functional block diagram showing the contents of the various types of processing performed at the server processing part 33 according to the present embodiment.

The server processing part 33 of the server 3 according to the present embodiment has, in addition to above-mentioned candidate route calculating part 331 and CO₂ estimated recovery calculating part 332, an adsorption upper limit judging part 333 and a recommended waypoint identifying part 334. These parts of the server processing part 33 are functional modules loaded by programs run on the processor of the server processing part 33.

The adsorption upper limit judging part 333 judges if the available capacity of the carbon dioxide recovery system 1 is liable to be used up before reaching the destination, that is, if the amount of adsorbed carbon dioxide adsorbed at the adsorbing part 55 is liable to reach the adsorption upper limit value, if driving on the candidate route selected by the vehicle occupant (below, referred to as the "selected candidate route") from among the candidate routes suggested on the information provision screen in the above-mentioned first embodiment.

The recommended waypoint identifying point 334 searches for waypoints which can collect carbon dioxide recovered by the carbon dioxide recovery system 1 from that carbon dioxide recovery system 1 and are present on the selected candidate route when it is judged at the adsorption upper limit peaking judging part 333 that the available capacity of the carbon dioxide recovery system 1 is liable to be used up. Further, it identifies waypoints recommended as waypoints to suggest to the vehicle occupant from among the found waypoints (below, referred to as the "recommended waypoints").

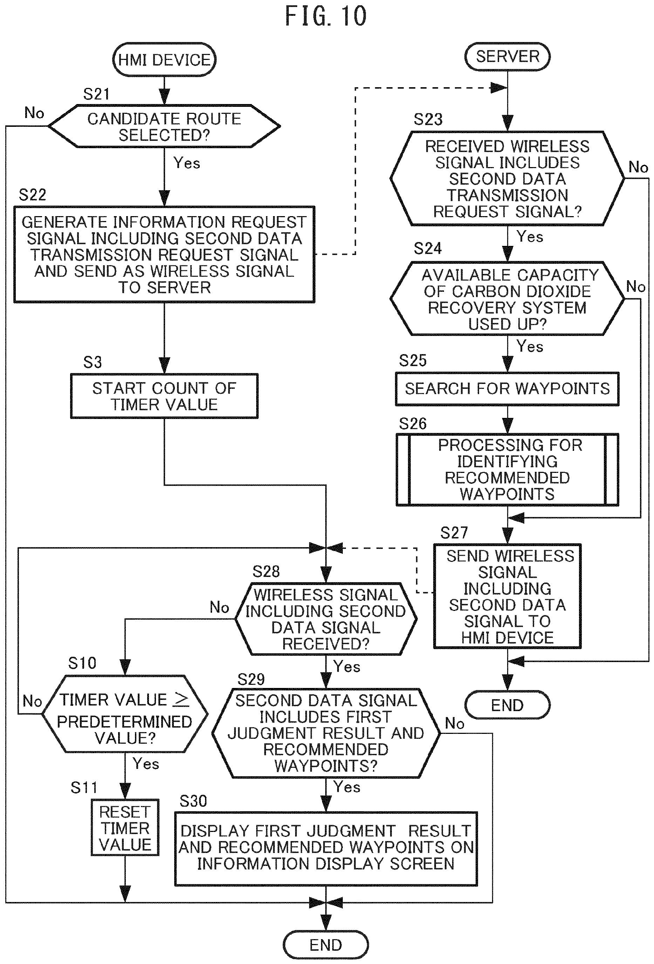

FIG. 10 is a flow chart showing one example of the information provision processing according to the present embodiment. In the flow chart shown in FIG. 10, the HMI device 2 and the server 3 communicate through the communication network 4. Note that in FIG. 10, the contents of the processing of step S3, step S10, and step S11 are similar to the first embodiment, so here the explanations will be omitted.

At step S21, the HMI processing part 27 judges based on the content of the acquired operating signal if any candidate route among the candidate routes displayed on the information display screen has been selected by the vehicle occupant in the above-mentioned first embodiment. When a candidate route has been selected, the HMI processing part 27 proceeds to the processing of step S22. On the other hand, if a candidate route has not been selected, the HMI processing part 27 ends the information provision processing.

At step S22, the HMI processing part 27 generates an information request signal including the current amount of adsorbed carbon dioxide, the adsorption upper limit value, the selected candidate route, the estimated amount of CO₂ recovery of the selected candidate route, and the second data transmission request signal. Further, the HMI processing part 27 transfers the generated information request signal to the wireless communicating part 21 and makes the wireless communicating part 21 send the information provision signal as a wireless signal from the wireless communicating part 21 to the server 3.

The second data transmission request signal is a signal requesting as second data from the server 3 the transmission of the result of judgment as to if the amount of adsorbed carbon dioxide adsorbed at the adsorbing part 55 is liable to reach the adsorption upper limit value if the carbon dioxide recovering vehicle 10 drives over the selected candidate route. Further, the second data transmission request signal is a signal requesting as second data from the server 3 the transmission of information regarding the recommended waypoints present on the selected candidate route if it is judged that the amount of adsorbed carbon dioxide adsorbed at the adsorbing part 55 is liable to reach the adsorption upper limit value.

At step S23, the server processing part 33 judges if the received wireless signal includes the second data transmission request signal. If the wireless signal includes the second data transmission request signal, the server processing part 33 proceeds to the processing of step S24. On the other hand, if the wireless signal does not include the second data transmission request signal, the server processing part 33 ends the information provision processing.

At step S24, the server processing part 33 judges based on the second data transmission request signal and information included in the information request signal such as the amount of adsorbed carbon dioxide, the adsorption upper limit value, and the estimated amount of CO₂ recovery of the selected candidate route whether the available capacity of the carbon dioxide recovery system 1 would be liable to be used up, that is, whether the amount of adsorbed carbon dioxide adsorbed at the adsorbing part 55 would be liable to reach the adsorption upper limit value, if the carbon dioxide recovering vehicle 10 were driven over the selected candidate route.

In the present embodiment, the server processing part 33 prepares a result of judgment judging that the amount of adsorbed carbon diode is liable to reach the adsorption upper limit value before reaching the destination if the sum of the amount of adsorbed carbon dioxide and the estimated amount of CO₂ recovery of the selected candidate route is larger than the adsorption upper limit value (below, referred to as the "first judgment result") and proceeds to the processing of step S25. On the other hand, the server processing part 33 prepares a result of judgment judging that the amount of adsorbed carbon diode is not liable to reach the adsorption upper limit value before reaching the destination if the sum of the amount of adsorbed carbon dioxide and the estimated amount of CO₂ recovery of the selected candidate route is the adsorption upper limit value or less (below, referred to as the "second judgment result") and proceeds to the processing of step S27.

At step S25, the server processing part 33 refers to the map data stored in the server storage part 32 and searches for waypoints present on the selected candidate route at which carbon dioxide adsorbed at the adsorbing part 55 can be collected. The waypoints can be made any locations where apparatuses are installed able to collect carbon dioxide adsorbed at the adsorbing part 55. For example, gasoline stands or parking lots of commercial facilities or service areas or parking areas of highways etc. may be mentioned.

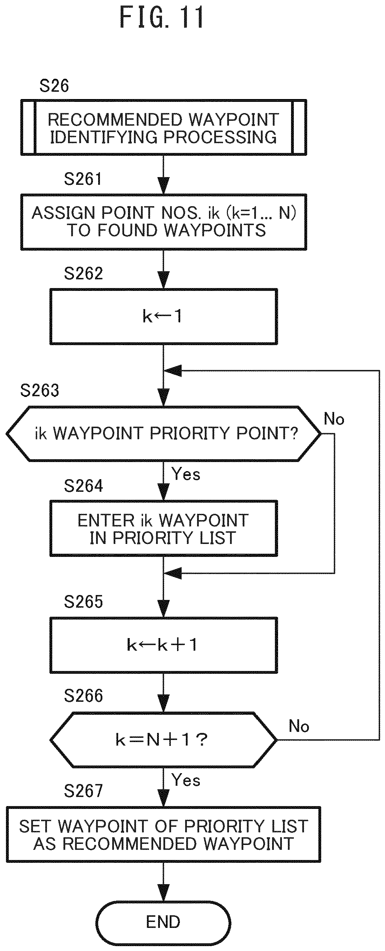

At step S26, the server processing part 33 performs processing for identifying recommended waypoints in which it identifies recommended waypoints from among the found waypoints. Details of the processing for identifying recommended waypoints will be explained while referring to FIG. 11.

FIG. 11 is a flow chart showing details of processing for identifying recommended waypoints.

At step S261, the server processing part 33 assigns point numbers ik (k=1, 2, ..., N) to the waypoints found.

At step S262, the server processing part 33 sets the no. "k" to 1.

At step S263, the server processing part 33 refers to the map data stored in the server storage part 32 and judges if the waypoint of the point no. iₖ is a priority point. A "priority point" is a point where a carbon dioxide recovering vehicle 10 is offered an incentive not offered to a vehicle not provided with a carbon dioxide recovery system 1. As such a priority point, for example, a point where parking spaces are set aside exclusively for carbon dioxide recovering vehicles, a point where a special driving lane is set for carbon dioxide recovering vehicles in a zone heading toward the priority point or the toll for that zone is decreased etc. may be mentioned. Further, for example, if the waypoints are purchasing the collected carbon dioxide, a waypoint with a unit purchasing price higher than the average of the purchasing prices of the waypoints purchasing carbon dioxide may be set as a priority point.

If the waypoint of the point no. iₖ is a priority point, the server processing part 33 proceeds to the processing of step S264. On the other hand, if the waypoint of the point no. iₖ is not a priority point, the server processing part 33 proceeds to the processing of step S265.

At step S264, the server processing part 33 registers the waypoint of the point no. ik in a priority list.

At step S265, the server processing part 33 increments the no. "k" by 1 to update the no. "k".

At step S266, the server processing part 33 judges whether all of the waypoints from the point no. i₁ to the point no. i_{N} have been judged as to if they were priority points. In the present embodiment, if the value of the no. "k" is the value of N plus 1, the server processing part 33 judges that all of the waypoints have been judged as to if they were priority points and proceeds to the processing of step S267. On the other hand, the value of no. "k" is not the value of N plus 1, the server processing part 33 judges that there are still waypoints remaining which have not been judged as to if they were priority points and returns to the processing of step S263.

At step S267, the server processing part 33 sets the waypoints registered in the priority list as the recommended waypoints.

Returning to FIG. 10, at step S27, if the result of judgment judging if the amount of adsorbed carbon dioxide is liable to reach the adsorption upper limit before reaching the destination is the first judgment result (that is, if the amount of adsorbed carbon dioxide is liable to reach the adsorption upper limit value before reaching the destination), the server processing part 33 generates a second data signal including information relating to the first judgment result and recommended waypoints and transfers it to the server communicating part 31 where the wireless signal including the first data signal is sent from the server communicating part 31 to the HMI device 2.

On the other hand, if the result of judgment judging if the amount of adsorbed carbon dioxide is liable to reach the adsorption upper limit before reaching the destination is the second judgment result (that is, if the amount of adsorbed carbon dioxide is not liable to reach the adsorption upper limit value before reaching the destination), the server processing part 33 generates a second data signal including only information relating to the second judgment result and transfers it to the server communicating part 31 where the wireless signal including the second data signal is sent from the server communicating part 31 to the HMI device 2.

At step S28, the HMI processing part 27 judges if it has received a wireless signal including the second data signal from the server 3. Specifically, the HMI processing part 27 judges if the wireless signal transferred from the wireless communicating part 21 includes the second data signal. If the wireless signal transferred from the wireless communicating part 21 includes the second data signal, the HMI processing part 27 proceeds to the processing of step S29. On the other hand, if the wireless signal transferred from the wireless communicating part 21 does not include the second data signal, the HMI processing part 27 proceeds to the processing of step S10.

At step S29, the HMI processing part 27 judges if the second data signal includes information relating to the first judgment result and recommended waypoints. If the second data signal includes information relating to the first judgment result and recommended waypoints, the HMI processing part 27 proceeds to the processing of step S30. On the other hand, if the second data signal does not include information relating to the first judgment result and recommended waypoints (that is, if the second data signal includes only the second judgment result), the HMI processing part 27 ends the information provision processing.

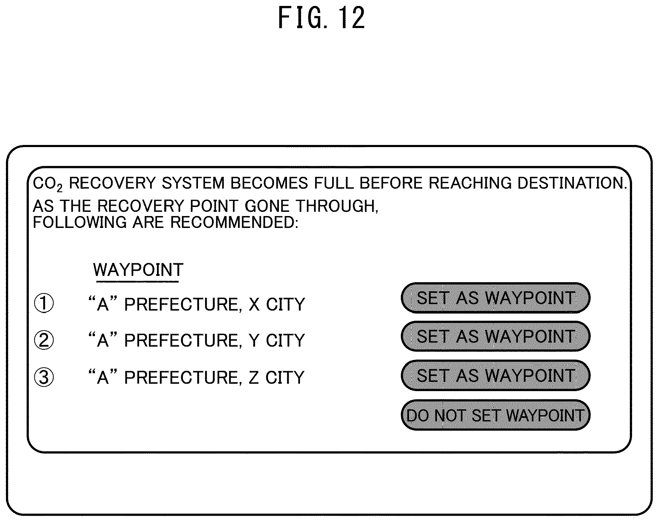

At step S30, the HMI processing part 27 generates a second information display signal including information relating to the first judgment result and the recommended waypoints, outputs it to the display part 23, and, for example, as shown in FIG. 12, makes the information display screen display information relating to the first judgment result and recommended waypoints together with selection buttons for the waypoints.

Note that in the present embodiment, if, in this way, the result of judgment of whether the amount of adsorbed carbon dioxide would be liable to reach the adsorption upper limit value before reaching the destination is the first judgment result, the recommended waypoints were identified and information relating to the first judgment result and recommended waypoints was made to be displayed on the information display screen, but the disclosure is not limited to this. It is also possible to make the information display screen display only the first judgment result, that is, notification of the fact that the available capacity of the carbon dioxide recovery system 1 is liable to be used up before reaching the destination.

The information display processing part 272 of the HMI device 2 according to the present embodiment explained above is configured so that, when the available capacity of the carbon dioxide recovery system 1 is liable to be used up before the vehicle 10 driving on the candidate route selected by the vehicle occupant would reach the destination, it makes the display part 23 display information to that effect.

Due to this, the vehicle occupant can be informed in advance that the available capacity of the carbon dioxide recovery system 1 is liable to be used up before reaching the destination, so the vehicle occupant can be prompted to get the recovered carbon dioxide collected from it. Therefore, it is possible to keep the vehicle 10 from being driven in a state where the carbon dioxide recovery system 1 cannot recover carbon dioxide.

Further, in the present embodiment, the information display processing part 272 is further configured so that, when the available capacity of the carbon dioxide recovery system 1 is liable to be used up before the vehicle 10 driving over the candidate route selected by the vehicle occupant reaches the destination, it displays information to that effect and makes the display part 23 display information relating to collection locations able to collect carbon dioxide from the carbon dioxide recovery system 1 present on the candidate route.

Due to this, the vehicle occupant can more easily drop into a collection location, so the vehicle occupant can be further prompted to get the recovered carbon dioxide collected from it.

In particular, in the present embodiment, the information display processing part 272 is configured so that, if there are several collection locations which can collect carbon dioxide from the carbon dioxide recovery system 1, it displays on the display part 23 on a priority basis the information relating to locations where the vehicle 10 provided with the carbon dioxide recovery system 1 is offered an incentive.

Due to this, the vehicle occupant can more easily drop into a collection location and the vehicle occupant can be provided with information relating to collection locations where incentives are offered, so the merits obtained by owning a carbon dioxide recovering vehicle 10 can be enhanced.

### Modification of Second Embodiment

Next, a modification of the above-mentioned second embodiment will be explained. In the above-mentioned second embodiment, the candidate routes and the estimated amounts of CO2 recovery of the candidate routes were displayed on the information display screen, then it was judged if the available capacity of the carbon dioxide recovery system 1 would be liable to be used up if driving over a candidate route selected from among them. When the available capacity of the carbon dioxide recovery system 1 would be liable to be used up, it was made possible to display that fact on the information display screen.

However, more simply, for example, it is also possible to request only information on the candidate routes from the server 3 when a destination was input in the first embodiment and make the information display screen display the information relating to the candidate routes, to request from the server only information regarding the result of judgment as to if the available capacity of the carbon dioxide recovery system 1 is liable to be used up if driving over the selected candidate route when any candidate route is selected from among them, and to make the information display screen display the fact that the requested result of judgment was the first judgment result (that is, if the amount of adsorbed carbon dioxide is liable to reach the adsorption upper limit value before reaching the destination) when that is so.

That is, according to this modification of second embodiment, it is possible to provide an HMI device 2 (information provision apparatus) for providing information to an occupant of a vehicle 10 provided with a carbon dioxide recovery system 1 in which the HMI device 2 is provided with a display part 23 displaying information and an information display processing part 272 configured to make the display part 23 display the fact that the available capacity of the carbon dioxide recovery system 1 will be used up before the vehicle 10 reaches the destination when that is so.

Due to this, a vehicle occupant can be informed in advance that the available capacity of the carbon dioxide recovery system 1 is liable to be used up before reaching the destination, so the awareness of the vehicle occupant about recovery of carbon dioxide can be raised while collection of the recovered carbon dioxide can be prompted.

### Third Embodiment

Next, a third embodiment of the present disclosure will be explained. The present embodiment differs from the second embodiment in content of the processing for setting recommended waypoints on the point of considering the degrees of congestion of the waypoints when setting recommended waypoints. Below, this point of difference will be focused on in the explanation.

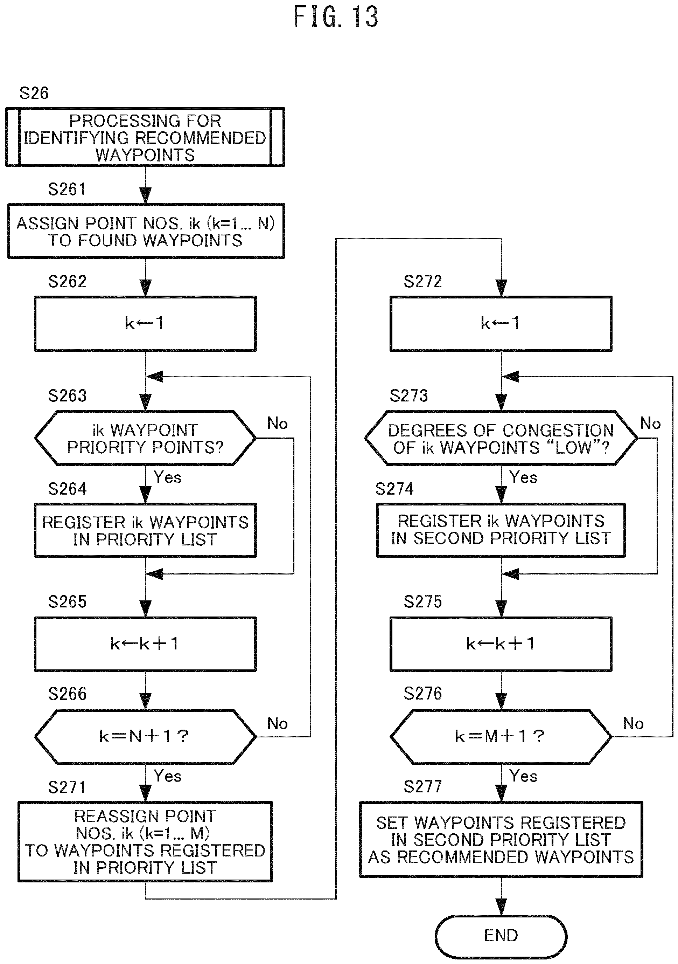

FIG. 13 is a flow chart showing details of the processing for setting recommended waypoints according to the present embodiment. In FIG. 13, the processing from step S261 to step S266 is similar to the second embodiment, so here the explanations will be omitted.

At step S271, the server processing part 33 reassigns point nos. ik (k=1, 2, ..., M) to the waypoints registered on the priority list.

At step S272, the server processing part 33 sets the no. "k" to 1.

At step S273, the server processing part 33, for example, judges the degree of congestion of the waypoint of the point no. ik based on the outside information received from the outside communication center. In the present embodiment, the degree of congestion is judged as "low", "medium", or "high", i.e., divided into three stages. The server processing part 33 proceeds to the processing of step S274 if the degree of congestion is "low" and proceeds to the processing of step S275 if otherwise.

The degree of congestion can, for example, be judged from information included in the outside information such as the availability of parking spaces at the waypoint and the wait time judged from the number of vehicles waiting for collection of carbon dioxide. At that time, for example, if there is a special service offered during the wait time etc., the degree of congestion can be judged one stage lower considering that special service. Further, in addition, the degree of congestion can be judged based on just information of the waypoints registered in map data (for example, number of apparatuses for collecting carbon dioxide from carbon dioxide recovery systems 1 etc.)

At step S274, the server processing part 33 registers the waypoint of the point no. ik in the second priority list.

At step S275, the server processing part 33 increments the no. "k" by 1 to update the no. "k".

At step S276, the server processing part 33 judges whether all of the waypoints from the point no. i₁ to the point no. iM have been judged for degree of congestion. In the present embodiment, if the value of the no. "k" is the value of M plus 1, the server processing part 33 judges that all of the waypoints have been judged for degree of congestion and proceeds to the processing of step S277. On the other hand, the value of no. "k" is not the value of M plus 1, the server processing part 33 judges that there are still waypoints remaining which have not been judged for degree of congestion and returns to the processing of step S273.

At step S267, the server processing part 33 sets the waypoints registered in the second priority list as the recommended waypoints.

The information display processing part 272 of the HMI device 2 according to the present embodiment explained above is configured so that if there are several collection locations offering incentives among the collection locations which can collect the carbon dioxide from the carbon dioxide recovery system 1, it makes the display part 23 display on a priority basis the information relating to the collection locations with lower degrees of congestion among them.

Due to this, when recovering carbon dioxide from the carbon dioxide recovery system 1 at a collection location, it is possible to keep down the wait time etc. and keep down the time required for recovery, so the load on the vehicle occupant can be lightened. Further, it is also possible to keep down the delay in the time for reaching the destination.

### Fourth Embodiment

Next, a fourth embodiment of the present disclosure will be explained. The present embodiment differs from the first embodiment on the point that the driver of the carbon dioxide recovering vehicle 10 is granted an incentive if actually driving over the selected candidate route. Below, this point of difference will be focused on in the explanation.

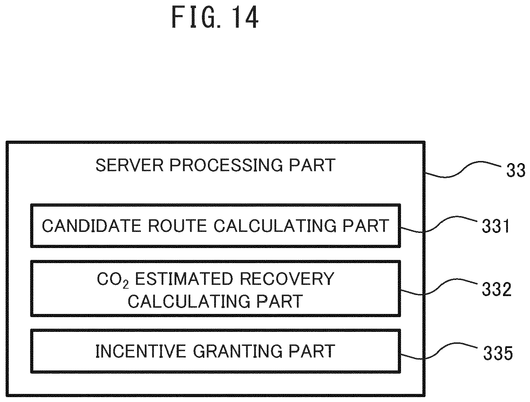

FIG. 14 is a functional block diagram showing the contents of the various types of processing performed at the server processing part 33 of the server 3 according to the present embodiment.

The server processing part 33 of the server 3 according to the present embodiment has, in addition to the above-mentioned candidate route calculating part 331 and CO₂ estimated recovery calculating part 332, an incentive granting part 335. These parts of the server processing part 33 are functional modules loaded by programs run on the processor of the server processing part 33.

When actually driving over the selected candidate route selected from among the candidate routes suggested on the information provision screen in the above-mentioned first embodiment, the incentive granting part 335 calculates the incentive corresponding to the estimated amount of CO₂ recovery of the selected candidate route which had been suggested on the information provision screen and grants it to the driver of the carbon dioxide recovering vehicle 10.

In the present embodiment, an amount of money corresponding to the estimated amount of CO₂ recovery which had been suggested on the information provision screen is made the incentive, but the disclosure is not limited to this. It is also possible to give the selected candidate route which had been suggested on the information provision screen an economic value corresponding to the estimated amount of CO₂ recovery. For example, it is possible to make the incentive something based on money (virtual currency or discount coupons etc.), carbon dioxide itself (dry ice etc.), or recycled products of carbon dioxide (fuel or chemical products). Further, for example, if the carbon dioxide recovering vehicle 10 is a rideshare vehicle etc., it is possible to provide some sort of service where one's own vehicle is given priority when dispatching vehicles to persons requesting rideshare.

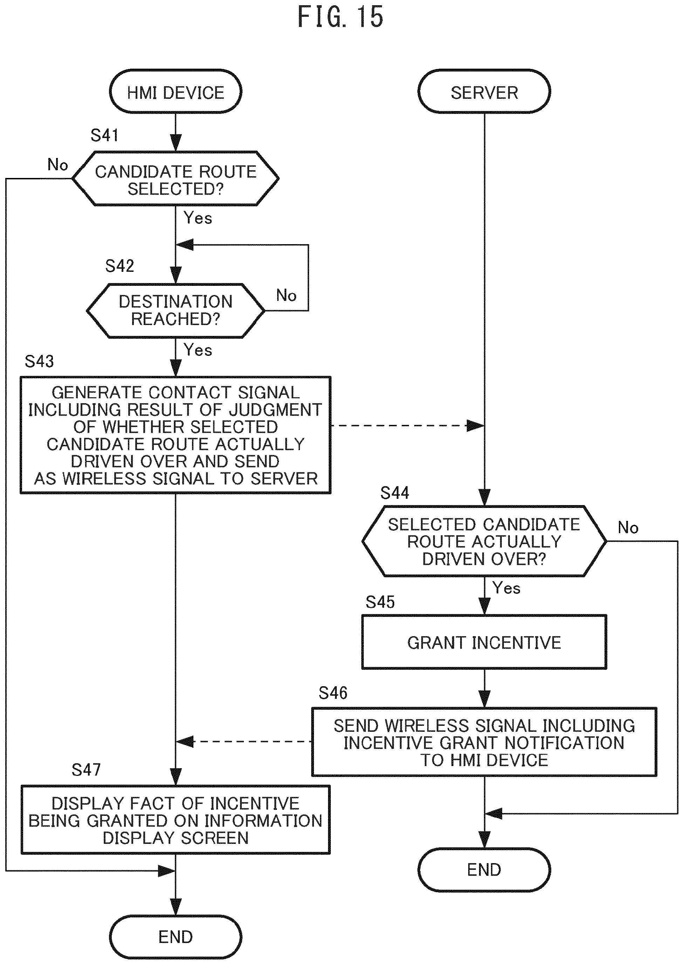

FIG. 15 is a flow chart showing one example of the information provision processing according to the present embodiment. In the flow chart shown in FIG. 15, the HMI device 2 and the server 3 communicate through the communication network 4.

At step S41, the HMI processing part 27 judges based on the content of the acquired operating signal if any candidate route among the candidate routes made to be displayed on the information display screen has been selected by the vehicle occupant in the above-mentioned first embodiment. If a candidate route has been selected, the HMI processing part 27 proceeds to the processing of step S42. On the other hand, if no candidate route has been selected, the HMI processing part 27 ends the information provision processing.

At step S42, the HMI processing part 27 judges based on the acquired current position signal if the carbon dioxide recovering vehicle 10 has reached its destination (or its vicinity). If the carbon dioxide recovering vehicle 10 has reached its destination, the HMI processing part 27 proceeds to the processing of step S43. On the other hand, if the carbon dioxide recovering vehicle 10 has not yet reached its destination, the HMI processing part 27 again performs the processing of step S42 after a predetermined interval.

At step S43, the HMI processing part 27 judges if the carbon dioxide recovering vehicle 10 has actually driven over the selected candidate route based on the driving history and generates a contact signal including the judgment result, the estimated amount of CO₂ recovery of the selected candidate route, and driver information including the personal identification ID of the driver stored in the HMI storage part 26 in advance. Further, the HMI processing part 27 transfers the generated contact signal to the wireless communicating part 21 and makes the wireless communicating part 21 send the contact signal as a wireless signal from the wireless communicating part 21 to the server 3.

Note that in the present embodiment, in judging whether the carbon dioxide recovering vehicle 10 has actually driven over the selected candidate route, for example, if an accident occurring after selection of the candidate route or road conditions or other force majeure causes deviation from the selected candidate route, it is judged that the vehicle has actually driven over the selected candidate route.

At step S44, the server processing part 33 refers to the results of judgment as to whether the carbon dioxide recovering vehicle 10 contained in the received contact signal had actually driven over the selected candidate route. If the carbon dioxide recovering vehicle 10 had actually driven over the selected candidate route, it proceeds to the processing of step S45, while if the carbon dioxide recovering vehicle 10 had not actually driven over the selected candidate route, it ends the information provision processing.

At step S45, the server processing part 33 calculates the incentive based on the estimated amount of CO₂ recovery of the selected candidate route contained in the received contact signal. In the present embodiment, the server processing part 33 calculates an amount of money corresponding to the estimated amount of CO₂ recovery as the incentive. Further, the server processing part 33 identifies the driver based on the driver information contained in the received contact signal and grants that driver the incentive. In the present embodiment, the server processing part 33 remits to the account of the identified driver an amount of money corresponding to the estimated amount of CO₂ recovery.

At step S46, the server processing part 33 generates an incentive grant notification containing details of the incentive (in the present embodiment, the amount of the money remitted to the account), transfers it to the server communicating part 31, and sends a wireless signal containing the incentive grant notification from the server communicating part 31 to the HMI device 2.

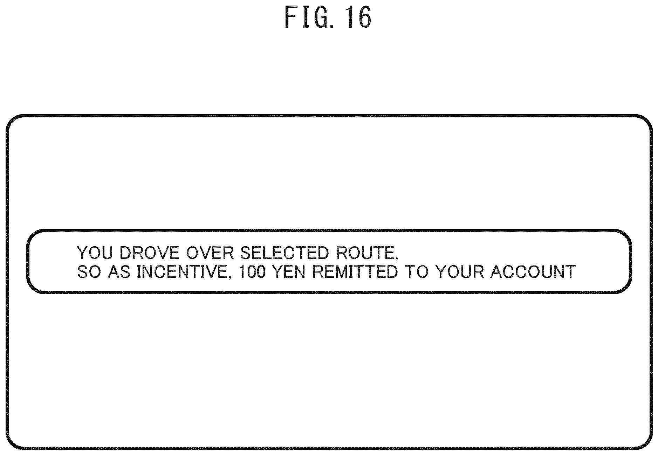

At step S47, the HMI processing part 27 takes out the content of the incentive from the incentive grant notification included in the received wireless signal. Further, the HMI processing part 27 generates a second information display signal including the content of the incentive taken out, outputs it to the display part 23, and, for example, displays a notification to the effect of an incentive being given and including content of the incentive on the information display screen as shown in FIG. 16.

According to the present embodiment explained above, in the information provision system provided with the HMI device 2 (information provision apparatus) and server 3 configured to be able to communicate with the HMI device 2, the server 3 is configured to grant to the driver of the vehicle 10 an incentive corresponding to the previously determined amount of recovery of the selected candidate route when receiving from the HMI device 2 a notification to the effect of the candidate route selected by a vehicle occupant having been actually driven over by the vehicle 10.

In this way, by making it possible to receive an incentive corresponding to the estimated amount of recovery of the selected candidate route when actually driving over the selected candidate route, the driver of the vehicle 10 can be prompted to select the candidate route with the largest estimated amount of recovery and in turn recovery of carbon dioxide can be promoted.

Further, the server 3 is configured so as to send to the HMI device 2 an incentive grant notification containing content of the incentive when granting the driver of the vehicle 10 an incentive. The information display processing part 272 of the HMI device 2 is configured to make the display part 23 display information relating to content of the incentive when an incentive grant notification is received by the HMI device 2 from the server 3.

In this way, when an incentive is granted, the content of the same can be provided to the driver of the vehicle 10 so the driver of the vehicle 10 can be prompted more to select a candidate route with a large estimated amount of recovery.

Above, embodiments of the present disclosure were explained, but the above embodiments only show some of the examples of application of the present disclosure and are not meant to limit the technical scope of the present disclosure to the specific configurations of the embodiments.

For example, in the above embodiments, the carbon dioxide recovery system 1 was mounted in a vehicle 10 provided with an internal combustion engine and the exhaust discharged from the internal combustion engine was introduced into the carbon dioxide recovery system 1 to recover the carbon dioxide in the exhaust. However, the disclosure is not limited to this. In an electric vehicle not provided with an internal combustion engine, for example, it is also possible to provide a pump etc. in the gas flow passage 51 to enable the atmosphere to be introduced into the carbon dioxide recovery system 1 and enable carbon dioxide in the atmosphere to be recovered.

In this case, the CO₂ estimated recovery calculating part 332 can calculate the estimated amount of CO₂ recovery based on the concentrations of carbon dioxide in the atmosphere around the candidate routes. Specifically, it can calculate the estimated amount of CO₂ recovery based on the concentration of carbon dioxide in the atmosphere around the candidate routes so that the estimated amount of CO₂ recovery becomes greater the higher the concentration of carbon dioxide in the atmosphere at the surroundings in a candidate route.

## Claims

1. An information provision apparatus (2) configured to provide information to an occupant of a vehicle provided with a carbon dioxide recovery system (1), wherein
the information provision apparatus (2) comprises:
a processing part (27) configured to:
judge if the occupant of the vehicle has input a destination of the vehicle, and
in response to judging that the occupant of the vehicle has input the destination of the vehicle, acquire a current position signal and generate an information request signal including data on the current position and the destination of the vehicle;
a display part (23) configured to display information;
a wireless communication part (21) configured to transmit the information request signal to request, from a server (3), the transmission of information relating to a candidate route to the destination of the vehicle and an estimated amount of recovery of carbon dioxide which would be recovered by the carbon dioxide recovery system (1) if driving on the candidate route;
wherein the wireless communication part (21) is further configured to receive a data signal from the server (3) including information relating to the candidate route and the estimated amount of recovery of carbon dioxide which would be recovered by the carbon dioxide recovery system (1) if driving on the candidate route; and
an information display processing part (272) configured to display, on the display part (23), the information relating to the candidate route to the destination of the vehicle and the estimated amount of recovery of carbon dioxide which would be recovered by the carbon dioxide recovery system (1) if driving on the candidate route, linked together.

2. The information provision apparatus (2) according to claim 1, wherein
the information display processing part (272) is further configured so that, when there are a plurality of the candidate routes, it displays information, relating to the candidate routes and estimated amounts of recovery of the candidate routes, linked together on the display part (23).

3. The information provision apparatus (2) according to claim 1 or claim 2, wherein
the information display processing part (272) is further configured so that, if the available capacity of the carbon dioxide recovery system (1) would be liable to be used up before the vehicle reaches its destination if driving over the candidate route selected by the occupant, it displays information to that effect on the display part (23).

4. The information provision apparatus (2) according to claim 3, wherein
the information display processing part (272) is further configured so that, if the available capacity of the carbon dioxide recovery system (1) would be liable to be used up before the vehicle reaches its destination if driving over the candidate route selected by the occupant, it displays on the display part (23), together with information to that effect, information on a collection location able to collect carbon dioxide from the carbon dioxide recovery system (1) present on the candidate route.

5. The information provision apparatus (2) according to claim 4, wherein
the information display processing part (272) is further configured so that, if there are a plurality of the collection locations present, it makes the display part (23) display on a priority basis the information relating to a collection location where the vehicle provided with the carbon dioxide recovery system (1) would be granted an incentive.

6. The information provision apparatus (2) according to claim 4, wherein
the information display processing part (272) is further configured so that, if there are a plurality of the collection locations present, it makes the display part (23) display on a priority basis the information relating to a collection location with a low degree of congestion.

7. The information provision apparatus (2) according to claim 5, wherein
the information display processing part (272) is further configured so that, if there are a plurality of the collection locations where incentives are offered present, it makes the display part (23) display on a priority basis the information relating to a collection location with a low degree of congestion among them.

8. An information provision system comprising an information provision apparatus (2) according to any one of claim 1 to claim 7 and the server (3) configured to be able to communicate with the information provision apparatus (2), wherein
the server (3) comprises an incentive granting part (335) configured so as to grant to the driver of the vehicle an incentive corresponding to the estimated amount of recovery of the selected candidate route when receiving from the information provision apparatus (2) a notification to the effect that the vehicle has actually driven over the candidate route selected by the occupant.

9. The information provision system according to claim 8, wherein
the incentive granting part (335) is further configured so as to send to the information provision apparatus (2) an incentive grant notification including content of the incentive when granting an incentive to the driver of the vehicle and
the information display processing part (272) is further configured so as to make the display part (23) display information relating to the content of the incentive when the information provision apparatus (2) receives the incentive grant notification from the server (3).

## Patentansprüche

1. Informationsbereitstellungsvorrichtung (2), die konfiguriert ist, Informationen für einen Insassen eines Fahrzeugs, das mit einem Kohlenstoffdioxid-Rückgewinnungssystem (1) ausgerüstet ist, bereitzustellen, wobei
die Informationsbereitstellungsvorrichtung (2) Folgendes umfasst:
einen Verarbeitungsabschnitt (27), der konfiguriert ist zum:
Beurteilen, ob der Insasse des Fahrzeugs ein Ziel des Fahrzeugs eingegeben hat, und
in Reaktion auf das Beurteilen, dass der Insasse des Fahrzeugs das Ziel des Fahrzeugs eingegeben hat, Erfassen eines Signals der aktuellen Position und Erzeugen eines Informationsanforderungssignals, das Daten der aktuellen Position und des Ziels des Fahrzeugs enthält;
einen Anzeigeabschnitt (23), der konfiguriert ist, Informationen anzuzeigen;
einen Abschnitt (21) für drahtlose Kommunikation, der konfiguriert ist, das Informationsanforderungssignal zu senden, um von einem Server (3) das Senden von Informationen bezüglich einer Kandidatenroute zu dem Ziel des Fahrzeugs und eines geschätzten Betrags der Rückgewinnung von Kohlenstoffdioxid, der durch das Kohlenstoffdioxid-Rückgewinnungssystem (1) zurückgewonnen würde, falls auf der Kandidatenroute gefahren wird, anzufordern;
wobei der Abschnitt (21) für drahtlose Kommunikation konfiguriert ist, von dem Server (3) ein Datensignal zu empfangen, das Informationen bezüglich der Kandidatenroute und des geschätzten Betrags der Rückgewinnung von Kohlenstoffdioxid, der durch das Kohlenstoffdioxid-Rückgewinnungssystem (1) zurückgewonnen würde, falls auf der Kandidatenroute gefahren wird, enthält; und
einen Informationsanzeige-Verarbeitungsabschnitt (272), der konfiguriert ist, auf dem Anzeigeabschnitt (23) die Informationen bezüglich der Route zu dem Ziel des Fahrzeugs und des geschätzten Betrags der Rückgewinnung von Kohlenstoffdioxid, der durch das Kohlenstoffdioxid-Rückgewinnungssystem (1) zurückgewonnen würde, falls auf der Kandidatenroute gefahren wird, in gegenseitiger Verknüpfung anzuzeigen.

2. Informationsbereitstellungsvorrichtung (2) nach Anspruch 1,
wobei der Informationsanzeige-Verarbeitungsabschnitt (272) ferner so konfiguriert ist, dass er dann, wenn mehrere Kandidatenrouten vorhanden sind, Informationen bezüglich der Kandidatenrouten und geschätzte Beträge der Rückgewinnung der Kandidatenrouten in gegenseitiger Verknüpfung auf dem Anzeigeabschnitt (23) anzeigt.

3. Informationsbereitstellungsvorrichtung (2) nach Anspruch 1 oder Anspruch 2, wobei
der Informationsanzeige-Verarbeitungsabschnitt (272) ferner so konfiguriert ist, dass er dann, wenn die verfügbare Kapazität des Kohlenstoffdioxid-Rückgewinnungssystems (1) wahrscheinlich aufgebraucht sein würde, bevor das Fahrzeug sein Ziel erreicht, falls auf der durch den Insassen gewählten Kandidatenroute gefahren wird, Informationen hierzu auf dem Anzeigeabschnitt (23) anzeigt.

4. Informationsbereitstellungsvorrichtung (2) nach Anspruch 3, wobei
der Informationsanzeige-Verarbeitungsabschnitt (272) ferner so konfiguriert ist, dass er dann, wenn die verfügbare Kapazität des Kohlenstoffdioxid-Rückgewinnungssystem (1) wahrscheinlich aufgebraucht sein würde, bevor das Fahrzeug sein Ziel erreicht, falls auf der durch den Insassen gewählten Kandidatenroute gefahren wird, auf dem Anzeigeabschnitt (23) zusammen mit Informationen hierzu Informationen über einen Sammelort anzeigt, der Kohlenstoffdioxid von dem Kohlenstoffdioxid-Rückgewinnungssystem (1) sammeln kann und auf der Kandidatenroute vorhanden ist.

5. Informationsbereitstellungsvorrichtung (2) nach Anspruch 4, wobei
der Informationsanzeige-Verarbeitungsabschnitt (272) ferner so konfiguriert ist, dass er dann, wenn mehrere Sammelorte vorhanden sind, den Anzeigeabschnitt (23) veranlasst, auf einer Prioritätsbasis Informationen bezüglich eines Sammelortes, an dem das mit dem Kohlenstoffdioxid-Rückgewinnungssystem (1) ausgestattete Fahrzeug einen Bonus gewährt bekommen würde, anzuzeigen.

6. Informationsbereitstellungsvorrichtung (2) nach Anspruch 4, wobei
der Informationsanzeige-Verarbeitungsabschnitt (272) ferner so konfiguriert ist, dass er dann, wenn mehrere Sammelorte vorhanden sind, den Anzeigeabschnitt (23) veranlasst, auf einer Prioritätsbasis die Informationen bezüglich eines Sammelortes mit geringem Andrang anzuzeigen.

7. Informationsbereitstellungsvorrichtung (2) nach Anspruch 5, wobei
der Informationsanzeige-Verarbeitungsabschnitt (272) ferner so konfiguriert ist, dass er dann, wenn Sammelorte vorhanden sind, an denen Boni angeboten werden, den Anzeigeabschnitt (23) veranlasst, auf einer Prioritätsbasis die Informationen bezüglich eines Sammelortes mit niedrigem Andrang unter ihnen anzuzeigen.

8. Informationsbereitstellungssystem, das eine Informationsbereitstellungsvorrichtung (2) nach einem der Ansprüche 1 bis 7 und den Server (3), der konfiguriert ist, mit der Informationsverarbeitungsvorrichtung (2) kommunizieren zu können, umfasst, wobei
der Server (3) einen Bonusgewährungsabschnitt (335) enthält, der konfiguriert ist, dem Fahrer des Fahrzeugs einen Bonus zu gewähren, der dem geschätzten Rückgewinnungsbetrag der gewählten Kandidatenroute entspricht, wenn er von der Informationsbereitstellungsvorrichtung (2) eine Mitteilung empfängt, dass das Fahrzeug tatsächlich auf der durch den Insassen gewählten Kandidatenroute gefahren ist.

9. Informationsbereitstellungssystem nach Anspruch 8, wobei
der Bonusgewährungsabschnitt (335) ferner konfiguriert ist, zu der Informationsbereitstellungsvorrichtung (2) eine Bonusgewährungsmitteilung, die Inhalt des Bonus enthält, zu senden, wenn dem Fahrer des Fahrzeugs ein Bonus gewährt wird, und
der Informationsanzeige-Verarbeitungsabschnitt (272) ferner so konfiguriert ist, dass er den Anzeigeabschnitt (23) veranlasst, Informationen bezüglich des Inhalts des Bonus anzuzeigen, wenn die Informationsbereitstellungsvorrichtung (2) die Bonusgewährungsmitteilung von dem Server (3) empfängt.

## Revendications

1. Appareil (2) de fourniture d'informations configuré pour fournir des informations à un occupant d'un véhicule muni d'un système (1) de récupération de dioxyde de carbone,
l'appareil (2) de fourniture d'informations comportant :
une partie (27) de traitement configurée pour :
juger si l'occupant du véhicule a introduit une destination du véhicule, et
en réaction au fait de juger que l'occupant du véhicule a introduit la destination du véhicule, acquérir un signal de position actuelle et générer un signal de demande d'informations incluant des données sur la position actuelle et la destination du véhicule ;
une partie (23) d'affichage configurée pour afficher des informations ;
une partie (21) de communication sans fil configurée pour émettre le signal de demande d'informations afin de demander, auprès d'un serveur (3), la transmission d'informations relatives à un itinéraire candidat jusqu'à la destination du véhicule et une quantité estimée de récupération de dioxyde de carbone qui serait récupérée par le système (1) de récupération de dioxyde de carbone en cas de circulation sur l'itinéraire candidat ;
la partie (21) de communication sans fil étant en outre configurée pour recevoir en provenance du serveur (3) un signal de données incluant des informations relatives à l'itinéraire candidat et la quantité estimée de récupération de dioxyde de carbone qui serait récupérée par le système (1) de récupération de dioxyde de carbone en cas de circulation sur l'itinéraire candidat ; et
une partie (272) de traitement d'affichage d'informations configuré pour afficher, sur la partie (23) d'affichage, les informations relatives à l'itinéraire candidat jusqu'à la destination du véhicule et la quantité estimée de récupération de dioxyde de carbone qui serait récupérée par le système (1) de récupération de dioxyde de carbone en cas de circulation sur l'itinéraire candidat, liées ensemble.

2. Appareil (2) de fourniture d'informations selon la revendication 1,
la partie (272) de traitement d'affichage d'informations étant en outre configurée de telle façon que, lorsqu'il existe une pluralité des itinéraires candidats, elle affiche des informations, relatives aux itinéraires candidats et aux quantités estimées de récupération des itinéraires candidats, liées ensemble sur la partie (23) d'affichage.

3. Appareil (2) de fourniture d'informations selon la revendication 1 ou la revendication 2,
la partie (272) de traitement d'affichage d'informations étant en outre configurée de telle façon que, si la capacité disponible du système (1) de récupération de dioxyde de carbone est susceptible d'être épuisée avant que le véhicule n'atteigne sa destination en cas de circulation sur l'itinéraire candidat sélectionné par l'occupant, elle affiche des informations en ce sens sur la partie (23) d'affichage.

4. Appareil (2) de fourniture d'informations selon la revendication 3,
la partie (272) de traitement d'affichage d'informations étant en outre configurée de telle façon que, si la capacité disponible du système (1) de récupération de dioxyde de carbone est susceptible d'être épuisée avant que le véhicule n'atteigne sa destination en cas de circulation sur l'itinéraire candidat sélectionné par l'occupant, elle affiche sur la partie (23) d'affichage, conjointement à des informations en ce sens, des informations sur un lieu de collecte, capable de collecter du dioxyde de carbone à partir du système (1) de récupération de dioxyde de carbone, présent sur l'itinéraire candidat.

5. Appareil (2) de fourniture d'informations selon la revendication 4,
la partie (272) de traitement d'affichage d'informations étant en outre configurée de telle façon que, s'il existe une pluralité des lieux de collecte présents, elle fasse afficher en priorité par la partie (23) d'affichage les informations relatives à un lieu de collecte où le véhicule muni du système (1) de récupération de dioxyde de carbone se verrait attribuer une incitation.

6. Appareil (2) de fourniture d'informations selon la revendication 4,
la partie (272) de traitement d'affichage d'informations étant en outre configurée de telle façon que, s'il existe une pluralité des lieux de collecte présents, elle fasse afficher en priorité par la partie (23) d'affichage les informations relatives à un lieu de collecte présentant un faible degré d'encombrement.

7. Appareil (2) de fourniture d'informations selon la revendication 5,
la partie (272) de traitement d'affichage d'informations étant en outre configurée de telle façon que, s'il existe une pluralité des lieux de collecte présents où des incitations sont offertes, elle fasse afficher en priorité par la partie (23) d'affichage les informations relatives à un lieu de collecte présentant un faible degré d'encombrement parmi ceux-ci.

8. Système de fourniture d'informations comportant un appareil (2) de fourniture d'informations selon l'une quelconque des revendications 1 à 7 et le serveur (3) configuré pour pouvoir communiquer avec l'appareil (2) de fourniture d'informations,
le serveur (3) comportant une partie (335) d'attribution d'incitations configurée de façon à attribuer au conducteur du véhicule une incitation correspondant à la quantité estimée de récupération de l'itinéraire candidat sélectionné lorsqu'elle reçoit en provenance de l'appareil (2) de fourniture d'informations une notification selon laquelle le véhicule a effectivement parcouru l'itinéraire candidat sélectionné par l'occupant.

9. Système de fourniture d'informations selon la revendication 8,
la partie (335) d'attribution d'incitations étant en outre configurée de façon à envoyer à l'appareil (2) de fourniture d'informations une notification d'attribution d'incitation incluant un contenu de l'incitation lors de l'attribution d'une incitation au conducteur du véhicule et
la partie (272) de traitement d'affichage d'informations étant en outre configurée de façon à faire afficher par la partie (23) d'affichage des informations relatives au contenu de l'incitation lorsque l'appareil (2) de fourniture d'informations reçoit la notification d'attribution d'incitation en provenance du serveur (3).
